# EUROPEAN PATENT APPLICATION

(11) **EP 3 913 408 A1**
(43) Date of publication of application: **24.11.2021**
(21) Application number: 20305516.5
(22) Date of filing: 19.05.2020
(51) Int. Cl.: G02B 1/115, G02B 1/113, G02B 1/18, G02B 1/14

(54) **A METHOD OF PRODUCING A DEVICE AND DEVICE PRODUCED THEREWITH FOR PROVIDING IMPROVED ABRASION RESISTANCE TO OPTICAL LENSES**

(71) Applicant: ESSILOR INTERNATIONAL, 94220 Charenton-Le-Pont (FR)
(72) Inventor: LOCKWOOD, Matthew James, Dallas, Texas 75234 (US)
(74) Representative: Jacobacci Coralis Harle

(57) **Abstract**

The present disclosure relates an optical lens having improved abrasion resistance. In an embodiment, the present disclosure describes a method of improving abrasion resistance of a lens, comprising depositing an antireflective inorganic layer (415) of a predetermined thickness on a convex surface of a lens substrate (410) within a vacuum deposition chamber, and applying an anti-fouling material (425) as a top most layer of the lens to an exposed surface of the deposited inorganic layer,. The lens substrate may include a hard coating on a convex surface of a base substrate. In an embodiment, the method further comprises exposing the convex surface of the lens substrate to ion beam pre-cleaning for a predetermined time period.

## Description

### BACKGROUND

### FIELD OF THE DISCLOSURE

The present disclosure relates to a method for the preparation of optical lenses having improved abrasion resistance. Moreover, the present disclosure relates to an optical lens, having improved abrasion resistance, generated by the methods described herein.

### DESCRIPTION OF THE RELATED ART

In the ophthalmic optics field, ophthalmic lenses are traditionally provided with a variety of coatings in order to afford lenses a plurality of mechanical and/or optical properties. For instance, the coatings, which may form successive layers on a lens substrate, may provide impact-resistance, anti-reflective properties, reflective properties, and/or abrasion resistance.

Numerous approaches have proposed technical solutions to improve the abrasion resistant properties of abrasion resistant coatings by modifying the intrinsic properties of such coatings. For example, in the case of abrasion resistant sol/gel coatings, approaches include using precursors that increase the degree of crosslinking of the abrasion resistant coating matrix and using specific curing catalytic systems.

To now, however, the above-described approaches fail to provide suitable front side scratch resistance and topcoat durability, especially when applied to sun lenses. It can be appreciated that sun lenses, as compared to clear lenses, are subjected to a unique set of environmental factors and requirements. During a holiday to a sandy beach, for instance, this may include sand particles, salt particles, and other detritus, as well as demands for favorable aesthetics. Considered in addition to manufacturing constraints, an optimal lens has yet to be developed.

Accordingly, the present disclosure describes a method of providing, for instance, improved abrasion resistance to optical lenses.

The foregoing "Background" description is for the purpose of generally presenting the context of the disclosure. Work of the inventors, to the extent it is described in this background section, as well as aspects of the description which may not otherwise qualify as prior art at the time of filing, are neither expressly or impliedly admitted as prior art against the present disclosure.

### SUMMARY

The present disclosure relates to a method for improving abrasion resistance of an optical lens.

According to an embodiment, the present disclosure further relates to a method of improving abrasion resistance of a lens, comprising depositing an inorganic layer of a predetermined thickness on a convex surface of a lens substrate within a vacuum deposition chamber, and applying an anti-fouling coating as a top most layer of the lens to an exposed surface of the deposited inorganic layer, wherein the lens substrate includes a hard coating on a convex surface of a base substrate. In an embodiment, the method further comprises exposing the convex surface of the lens substrate to ion beam pre-cleaning for a predetermined time period. In an embodiment, the method for improving abrasion resistance of an optical lens is as recited in any of claims 1 to 9.

According to an embodiment, the present disclosure further relates to a lens having abrasion resistance, comprising a lens substrate including a hard coating on a convex surface of a base substrate, an inorganic layer that is deposited, within a vacuum deposition chamber, on the hard coating of the lens substrate, the inorganic layer having a predetermined thickness, and an anti-fouling coating that is applied, within the vacuum deposition chamber, as a top most layer of the lens, to an exposed surface of the inorganic layer, a surface of the anti-fouling coating being exposed to atmosphere following retrieval of the lens from the vacuum deposition chamber, wherein the base substrate is polycarbonate and the lens substrate is an ion beam pre-cleaned lens substrate. In an embodiment, the lens having abrasion resistance is as recited in any of claims 10 to 15.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is an illustration of an ophthalmic lens having a treatment applied on a surface of an optical article of the lens, according to an exemplary embodiment of the present disclosure;
FIG. 2 is an illustration of an ophthalmic lens, according to an exemplary embodiment of the present disclosure;
FIG. 3 is a flow diagram of a method of improving abrasion resistance of an ophthalmic lens, according to an exemplary embodiment of the present disclosure;
FIG. 4 is an illustration of an ophthalmic lens, according to an exemplary embodiment of the present disclosure;
FIG. 5 is a flow diagram of a method of improving abrasion resistance of an ophthalmic lens, according to an exemplary embodiment of the present disclosure;
FIG. 6 is a graphical illustration of a method of improving abrasion resistance of an ophthalmic lens, according to an exemplary embodiment of the present disclosure;
FIG. 7A is a tabular illustration of an abrasion resistance of lenses, according to an exemplary embodiment of the present disclosure;
FIG. 7B is a tabular illustration of an abrasion resistance of lenses, according to an exemplary embodiment of the present disclosure; and
FIG. 8 is a tabular illustration of a contact angle measurement of lenses, according to an exemplary embodiment of the present disclosure.

### DETAILED DESCRIPTION

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). Reference throughout this document to "one embodiment", "certain embodiments", "an embodiment", "an implementation", "an example" or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

The terms "wafer" and "laminate" may be used interchangeably to refer to a similar structure.

The terms "about" and "approximately" are defined as being close to as understood by one of ordinary skill in the art. In one non-limiting embodiment the terms are defined to be within 10%, preferably, within 5%, more preferably, within 1%, and most preferably, within 0.5%.

A day at the beach presents a unique set of challenges in designing an ideal optical lens for a sun lens, or sunglass, wearer. At a high level, this challenge is addressed by considering either mirrored or non-mirrored sun lenses. Non-mirrored sun lenses provide a unique aesthetic but can be easily scratched and abraded by hard particles from sand, salt, and other grit, causing wearer discomfort and decreased product lifetime. Conversely, while mirrored sun lenses are useful at the beach in order to reduce glare, they may be simplistic and prone to scratching or may be overly complex and defined by a multi-level anti-reflective coating, which can impact visual and structural aesthetic of the sun lenses as well as negatively impact their manufacturing feasibility. To that end, both mirrored and non-mirrored sun lenses must also consider adhesion of a functional layer to a base lens substrate when seeking optimal visual and structural aesthetic.

In view of the above, the present disclosure describes an apparatus and method for increasing abrasion resistance and top coat performance of non-mirrored sun lenses while providing appropriate mechanical properties. The improved abrasion resistance and top coat performance may be realized on a convex surface of a polarized sun lens and/or tinted sun lens.

According to an embodiment, the sun lens of the present disclosure includes a lens substrate comprising a front face and a rear face. As used herein, the "rear face" may be referred to as a concave surface of the lens substrate and describes a surface which is located nearest an eye of a sun lens wearer. On the contrary, the "front face" may be referred to as a convex surface of the lens substrate and describes a surface which is located furthest from the eye of the sun lens wearer. In an embodiment, an anti-abrasion layer may be deposited onto at least one of the convex surface and the concave surface. In an example, the anti-abrasion layer is deposited onto the convex surface of the lens substrate.

In an embodiment, the lens substrate may include a base substrate. Thermoplastic materials that may be suitably used for the base substrate include (meth)acrylic (co)polymers, especially methyl poly(methacrylate) (PMMA), thio(meth)acrylic (co) polymers, polyvinylbutyral (PVB), polycarbonates, polyurethanes (PU), poly(thiourethanes), polyol allylcarbonate (co)polymers, thermoplastic copolymers of ethylene and vinyl acetate, polyesters such as polyethylene terephthalate (PET) or polybutylene terephthalate (PBT), polyepisulfides, polyepoxides, copolymers of polycarbonates and polyesters, copolymers of cycloolefins such as copolymers of ethylene and norbornene or ethylene and cyclopentadiene, and combinations thereof. As used herein a "(co)polymer" refers to a copolymer or a polymer. A (meth)acrylate is an acrylate or a methacrylate.

As used herein a "polycarbonate" (PC) refers to both the homopolycarbonates and the copolycarbonates and the block copolycarbonates. Polycarbonates are commercially available, for example, from General Electric Company under the trade name Lexan®, from Teijin under the trade name Panlite®, from Bayer under the trade name Bayer Blend®, from Mobay Chemical Corporation under the trade name Makrolon® and from Dow Chemical Company under the trade name Calibre®.

Generally speaking, suitable base substrates include those made of a crosslinked material (thermosetting materials). In an embodiment, the base substrate of the lens substrate may be a base substrate obtained by (co)polymerizing bis allyl carbonate of diethylene glycol, marketed by PPG Industries as CR-39®.

According to an exemplary embodiment, the present disclosure describes a method for providing improved abrasion resistance to an optical lens. The method includes deposition of a silica layer onto a convex surface of a lens substrate of the optical lens. The lens substrate may include a base substrate and a hard coat on the convex surface of the base substrate. In an embodiment, the optical lens may be a non-mirrored sun lens.

In an exemplary embodiment, the silica layer, also referred to herein as a silicon dioxide layer, an SiO₂ layer, and an oxide layer, may be deposited onto the lens substrate under passive oxygen. The oxygen may be applied at a partial pressure of 2.6e-2 Pa. It can be appreciated that other gases and/or rare gases, in addition to oxygen, may be used as appropriate during deposition. For instance, nitrogen may be supplied to the vacuum deposition chamber, in the alternative.

In an exemplary embodiment, the silica layer may be deposited on the convex surface of the lens substrate at a pre-determined thickness. The pre-determined thickness may be determined in view of specific deposition parameters, machines, and comparisons of refractive indices of involved materials. For instance, when a refractive index of the silica layer and a refractive index of the hard coat are mismatched, the pre-determined thickness of the silica layer may be about 215 nm. In the case of refractive index mismatches, desired color may also be considered as the delta therebetween will impact the visual hue of the sun lens.

In an exemplary embodiment, the base substrate of the lens substrate of the optical lens is a polycarbonate substrate and the method of the present disclosure further comprises exposing the convex surface of the lens substrate to ion beam pre-cleaning for a predetermined time period prior to deposition of the silica layer. The ion beam pre-cleaning may bombard the convex surface of the lens substrate with, for instance, argon ions. The pre-determined time may be determined in view of specific deposition parameters, machine parameters, and properties of involved materials. For instance, when the base substrate of the lens substrate of the optical lens is a polycarbonate substrate, the pre-determined time of the ion beam pre-cleaning may be 120 seconds. It can be appreciated, however, that the pre-determined time of the ion beam pre-cleaning may be modified in view of material properties and in an effort to maintain or improve adhesion between the to-be-deposited silica layer and the hard coated surface of the base substrate of the lens substrate.

According to an exemplary embodiment, the method of the present disclosure further includes applying an anti-fouling material as a coating to the deposited silica layer. The anti-fouling material may be a fluorinate material that provides, as a top coat, hydrophobic properties.

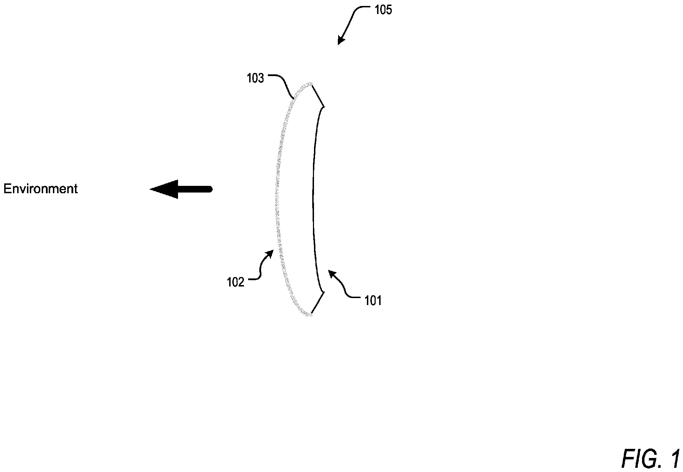

Turning now to the Figures, FIG. 1 provides an illustration of a cross section of a sun lens 105. The sun lens 105 may have a concave surface 101 that is nearest an eye of a sun lens wearer and a convex surface 102 that is furthest from the eye of the sun lens wearer and nearer to an external, visual environment of the sun lens wearer. The sun lens 105 may include, in an example, a polarizing layer 103 in order to provide certain solar-focused optical properties.

As introduced above, the present disclosure provides a method for providing a non-mirrored sun lens with, for instance, improved abrasion resistance. The method of the present disclosure, in achieving this, provides a relatively simple approach, particularly when considered in view of, for example, anti-reflective (AR) stacks.

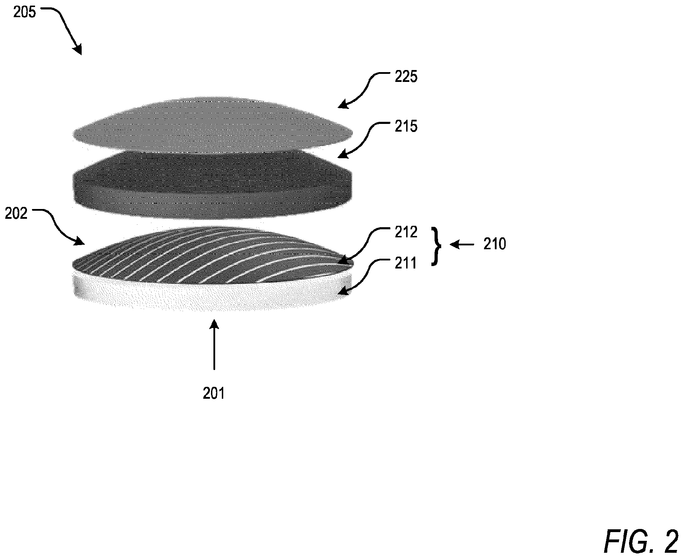

With that, and with reference now to FIG. 2, an illustration of a sun lens 205 is provided, according to an exemplary embodiment of the present disclosure. The sun lens 205 may comprise a lens substrate 210, including a base substrate 211 and a coating 212, an inorganic layer 215, and an anti-fouling coating 225. The inorganic layer 215 may be deposited on a convex surface 202 of the lens substrate 210, opposite a concave surface 201 of the lens substrate 210 which is nearest an eye of a sun lens wearer.

In an embodiment, the base substrate 211 of the lens substrate 210 may be made of mineral glass or organic glass. For instance, the base substrate 211 of the lens substrate 210 may be organic glass (e.g., polymer substrate). The organic glass can be of any material applicable to organic ophthalmic lenses, such as thermoplastic materials including polycarbonates and thermoplastic polyurethanes or thermosetting materials (e.g. cross-linked materials) including those obtained by polymerization of allyl derivatives such as the allyl carbonates of linear or branched aliphatic or aromatic polyols. This may further include diethylene glycol bis(allyl carbonate), isopropylene bis phenol-A bis(allyl carbonate), poly(meth)acrylates and copolymers based substrates, polythio(meth)acrylates, thermosetting polyurethanes, polythiourethanes, polyepoxides, polyepisulfides, as well as copolymers thereof and blends thereof. In an embodiment, the base substrate 211 of the lens substrate 210 may be an Orma® (Essilor) substrate and the like, such as one obtained by (co)polymerizing bis allyl carbonate of diethylene glycol, marketed by PPG Industries as CR-39®. The base substrate 211 may have a refractive index of about 1.5.

In an embodiment, the coating 212 may be a hard coating that provides certain abrasion-resistant and/or anti-scratch properties to the base substrate 211. The hard coating may be a Mithril hard coat (Essilor) and, in particular, based on a hydrolysate of y-glycidoxypropyltrimethoxysilane (GLYMO) and dimethyldiethoxysilane (DIVIDES), with colloidal silica and aluminum acetyl acetonate. The Mithril hard coat may have a refractive index of around 1.5. In an example, the Mithril hard coat has a refractive index of 1.6. The Mithril hard coat may have a thickness of between 3 µm and 6 µm, in an example, and may be applied to the base substrate 211 by dip coating and the like. Preferably, the coating 212 may be a Mithril hard coat and may have a thickness of 3.5 µm.

In an embodiment, the inorganic layer 215 may be a layer containing less than 5% by weight of carbon and, in an example, less than 1% by weight of carbon. The inorganic layer 215 may be, for instance, a silica layer deposited directly onto and in contact with the coating 212 of the lens substrate 210. The silica layer may be at least 80% by weight of SiO₂, preferably at least 90% by weight of SiO₂, more preferably at least 95% by weight of SiO₂ and most preferably 100% by weight of SiO₂. The silica layer may have a refractive index of about 1.5. The silica layer may have a predetermined thickness of between 80 nm and 300 nm, preferably between 175 nm and 250 nm, and more preferably about 215 nm. The predetermined thickness of the silica layer may be based on the refractive index of the base substrate 211 and the coating 212 of the lens substrate 210. As introduced above, the silica layer may provide anti-abrasion properties to the sun lens 205. Of course, it can be appreciated that the inorganic layer 215 may be any oxide or other material having similar material properties and functional properties. For instance, any material that has a low refractive index and low absorption may be considered. Consideration may also be given to dielectric layers in view of intended visual outcomes.

In an embodiment, the anti-fouling coating 225 may be applied following deposition of the inorganic layer 215 to the convex surface 202 of the lens substrate 210. The anti-fouling coating 225 may be a top coat of the sun lens 205 and may form the exterior barrier of the sun lens 205. In this way, an anti-reflective coating or AR stack is not implemented on, at least, a front side of the sun lens 205. The anti-fouling coating 225 may be hydrophobic and, thereby, allow an exterior surface of the sun lens 205 to be readily cleaned. In an embodiment, the anti-fouling coating 225 may be an organic material. The organic material may be comprised of at least 40% by weight of organic matter, and preferably at least 50% by weight of organic matter, relative to a total weight of the anti-fouling coating 225. The anti-fouling coating 225 may be a liquid coating material including at least one fluorinated compound. This is important in view of a desired hydrophobicity of the anti-fouling coating 225. Hydrophobic surface coatings most often comprise silane-based compounds bearing fluorinated groups and, in particular, perfluorocarbon or perfluoropolyether group(s). By way of example, silazane, polysilazane or silicone compounds are to be mentioned, comprising one or more fluorinecontaining groups such as those mentioned here above.

A classical method to form the anti-fouling coating 225 includes depositing compounds bearing fluorinated groups and Si-R groups, where R represents an -OH group or a precursor thereof, such as -CI, -NH₂, -NH- or -O-alkyl, and preferably an alkoxy group. Such compounds may perform, at the surface onto which they are deposited, directly or after hydrolysis, polymerization and/or cross-linking reactions with pendent reactive groups.

In an example, fluorinated compounds include silanes and silazanes bearing at least one group selected from fluorinated hydrocarcarbons, perfluorocarbons, fluorinated polyethers such as F₃C-(OC₃F₆)₂₄-O-(CF₂)₂-(CH₂)₂-O-CH₂-Si(OCH₃)₃ and perfluoropolyethers, in particular perfluoropolyethers. Among fluorosilanes there may be cited the compounds of formulae: 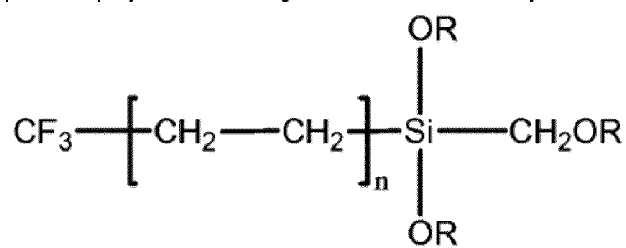 wherein n = 5, 7, 9 or 11 and R is an alkyl group. Typically, the fluorosilanes may further comprise a C₁-C₁₀ alkyl group such as methyl, ethyl and propyl:

CF₃CH₂CH₂ SiCl₃;

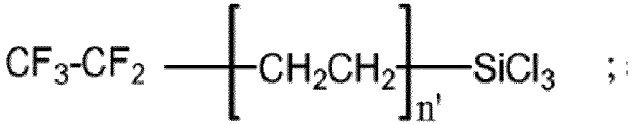

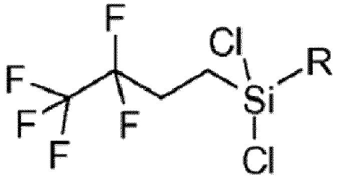

wherein n' = 7 or 9 and R is as defined above.

Compositions including fluorosilanes compounds also useful for making hydrophobic and/or oleophobic top coats. These compositions include silicon-containing organic fluoropolymers represented by the below general formula and having a number average molecular weight of between 5e2 and 1e5. 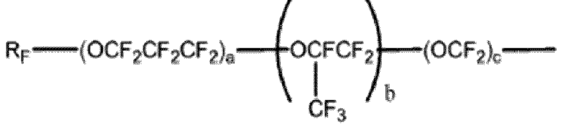 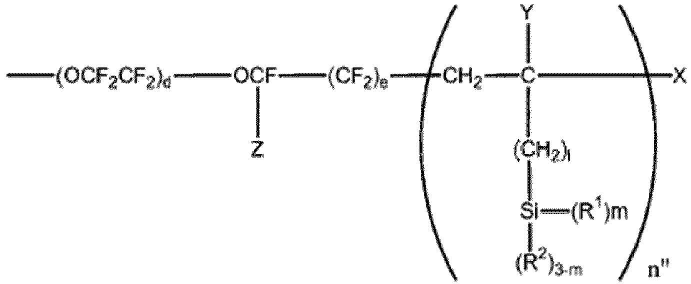 wherein R_{F} represents a perfluoroalkyl group, Z represents a fluorine atom or a trifluoromethyl group, a, b, c, d and e each independently represent 0 or an integer equal to or higher than 1, provided that a + b + c + d + e is not less than 1 and the order of the repeating units parenthesized by subscripts a, b, c, d and e occurring in the above formula is not limited to that shown, Y represents a hydrogen atom or an alkyl group containing 1 to 4 carbon atoms, X represents a hydrogen, bromine or iodine atom, R¹ represents a hydroxyl group or a hydrolyzable substituent group, R¹ represents a hydroxyl group or a hydrolysable substituent group, R² represents a hydrogen atom or a monovalent hydrocarbon group, I represents 0, 1 or 2, m represents 1, 2 or 3, and n" represents an integer equal to or higher than 1, preferably equal to or higher than 2. Other compositions for forming the hydrophobic surface coating are those including compounds comprising fluorinated polyether groups, in particular perfluoropolyether groups. The anti-fouling coating 225 may be an at least partially cured coating including a fluorinated siloxane prepared by applying a coating composition (typically in the form of a solution) comprising at least one fluorinated silane of the following formula: 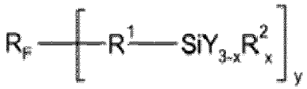 wherein R_{F} is a monovalent or divalent polyfluoro polyether group, R² is a divalent alkylene group, arylene group, or combinations thereof, optionally containing one or more heteroatoms or functional groups and optionally substituted with halide atoms, and preferably containing 2 to 16 carbon atoms, R² is a lower alkyl group (i.e., a C₁-C₄ alkyl group), Y is a halide atom, a lower alkoxy group (i.e., a C₁-C₄ alkoxy group, preferably, a methoxy or ethoxy group), or a lower acyloxy group (i.e., -OC(O)R³ wherein R³ is a C₁-C₄ alkyl group), x is 0 or 1, and y is 1 (R_{F} is monovalent) or 2 (R_{F} is divalent). Suitable compounds typically have a molecular weight (number average) of at least about 1000. Preferably, Y is a lower alkoxy group and RF is a perfluoro polyether group.

Commercial compositions for making the anti-fouling coating 225 include the compositions KY130 and KP 801 M commercialized by Shin-Etsu Chemical and the composition OPTOOL DSX (a fluorinebased resin comprising perfluoropropylene moieties) commercialized by Daikin Industries, which may be referred to herein as DSX.

The liquid coating material for forming the anti-fouling coating 225 of the disclosure may comprise one or more of the above cited compounds. Preferably, such compounds or mixtures of compounds are liquid or can be rendered liquid by heating, thus being in a suitable state for deposition.

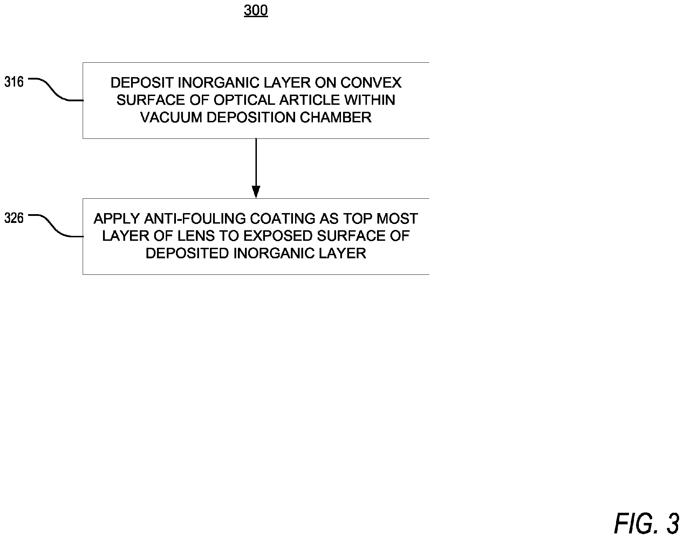

Referring now the flow diagram of FIG. 3, a method of generating a sun lens having improved abrasion resistance, as shown in FIG. 2, will now be described.

At step 316 of method 300, an inorganic layer may be deposited on a convex surface of an optical article, or lens substrate, within a vacuum deposition chamber. The lens substrate may include a base substrate and a coating, or hard coating, wherein the base substrate of the lens substrate may be made of mineral glass or organic glass and may be, in an example, an Orma® (Essilor) substrate or similar, such as one obtained by (co)polymerizing bis allyl carbonate of diethylene glycol, marketed by PPG Industries as CR-39®. The coating may be a hard coating that provides certain abrasion-resistant and/or anti-scratch properties to the base substrate. The coating may be a Mithril hard coat (Essilor) and, in particular, based on a hydrolysate of γ-glycidoxypropyltrimethoxysilane (GLYMO) and dimethyldiethoxysilane (DIVIDES), with colloidal silica and aluminum acetyl acetonate. The Mithril hard coat may have a thickness of between 1 µm and 10 µm, preferably between 2 µm and 6 µm, and more preferably between 3 µm and 5 µm, in an example. Preferably, the coating may be a Mithril hard coat and may have a thickness of 3.5 µm. In an embodiment, the coating may be deposited onto at least a part of a convex surface of the base substrate, preferably onto the entirety of the convex surface of the base substrate, by any one of a variety of methods used in coating technology. Such methods include, for instance, spray coating, spin coating, flow coating, brush coating, dip coating, and roll-coating. The composition can also be applied by a series of successive layers or thin coats onto the base substrate to achieve the desired thickness. Subsequently, the coating may be cured by conventional techniques (e.g., thermal or UV).

Prior to deposition, the lens substrate may be positioned within the vacuum deposition chamber and a vacuum may first be applied to the vacuum deposition chamber. The vacuum may be applied to a pressure selected in accordance with the particular materials and machines involved. For instance, the vacuum may be applied to a pressure of between 2e-3 Pa and 4e-3 Pa, and preferably about 3.5e-3 Pa. As introduced, the inorganic layer may be deposited onto the convex surface of the lens substrate at step 316 of method 300. The inorganic layer may be deposited by evaporation. In an example, the inorganic layer may be a layer of silica, or silicon dioxide, or SiO₂. The silica layer may be deposited by evaporating SiO₂ and/or SiOₓ, where 1<x<2, under the vacuum within the vacuum deposition chamber. The deposition rate during deposition of the silica layer may range between 0.2 nm/s and 1.5 nm/s, preferably between 0.3 nm/s and 0.7 nm/s, and preferably about 0.5 nm/s. It can be appreciated that the silica layer may comprise at least 80% by weight of SiO₂, preferably at least 90% by weight of SiO₂, more preferably at least 95% by weight of SiO₂, and most preferably 100% by weight of SiO₂. In an embodiment, a thickness of the deposited inorganic layer, or silica layer, in an example, may be between 80 nm and 300 nm, preferably between 175 nm and 250 nm, and more preferably about 215 nm. As introduced above, the silica layer may provide anti-abrasion properties to the sun lens.

During deposition of the silica layer, oxygen gas (O₂) may be introduced inside the vacuum deposition chamber during evaporation of the silicon oxide. The partial pressure of O₂ may be selected in accordance with the particular materials and machines involved. For instance, a minimum partial pressure of O₂ may be required for adhesion of the silica layer to the lens substrate. Preferably, the partial pressure of O₂ (pO₂) within the vacuum deposition chamber during deposition of the silica layer is higher than or equal to 1e-4 Pa, and more preferably is between 1.2e-2 Pa and 5e-2 Pa. In an example, the pO₂ is about 2.6e-2 Pa.

Notably, during method 300, deposition of the silica layer is conducted without prior surface cleaning by ion beam pre-cleaning treatment.

At step 326 of method 300, an anti-fouling coating may be applied to an exposed surface of the inorganic layer deposited at step 316 of method 300. The anti-fouling coating may be a hydrophobic coating, as described above. The anti-fouling coating may be applied by liquid phase deposition techniques including dip coating, spin coating (e.g., centrifugation), spray coating, or vapor phase deposition (e.g., vacuum evaporation). In the context of the present disclosure, vacuum evaporation is used in an embodiment. In an example, the anti-fouling coating may be DSX. During vacuum evaporation, the DSX may be positioned in a copper capsule and the capsule positioned in the middle of a tantalum evaporation boat and evaporated by Joule effect within the vacuum deposition chamber. The pressure during evaporation may be between 1e-5 Pa and 2.5e-2 Pa, and preferably about 2.5e-3 Pa. The applied anti-fouling coating may have a thickness lower than 15 nm, more preferably between 1 nm and 10 nm, and more preferably between 1 nm and 5 nm. Control of the deposited thickness can be performed by means of a quartz scale. The anti-fouling coating used herein may be used to improve dirty mark resistance of the finished article, which is particularly useful for optical lens. Reducing surface energy avoids the adhesion of fatty deposits, such as fingerprints, sebum, sweat, and cosmetics, and renders the sun lens easier to clean.

In certain embodiments, step 326 of method 300 may include application of a magnesium sulfide/magnesium oxide layer that assists with edging of the sun lens. The magnesium sulfide/magnesium oxide layer, however, may be removed by wiping, for instance, prior to evaluation and finishing.

In certain applications, a base substrate and a coating of a lens substrate may exhibit variable interactions when contacted with an inorganic layer. This is particularly important with respect to adhesion between the lens substrate and the inorganic layer of the sun lens. While the base substrate of the exemplary embodiment of FIG. 2 and FIG. 3 included an Orma® substrate and behaved in such a way that the inorganic layer may be deposited directly on the lens substrate without pre-treatment of a convex surface of the lens substrate, the behavior of other base substrates may vary. For instance, when the base substrate is a polycarbonate substrate, adhesion between the inorganic layer and the lens substrate may not be readily obtained. Accordingly, the convex surface of the lens substrate can be pre-treated in order to optimally-receive the inorganic layer during deposition.

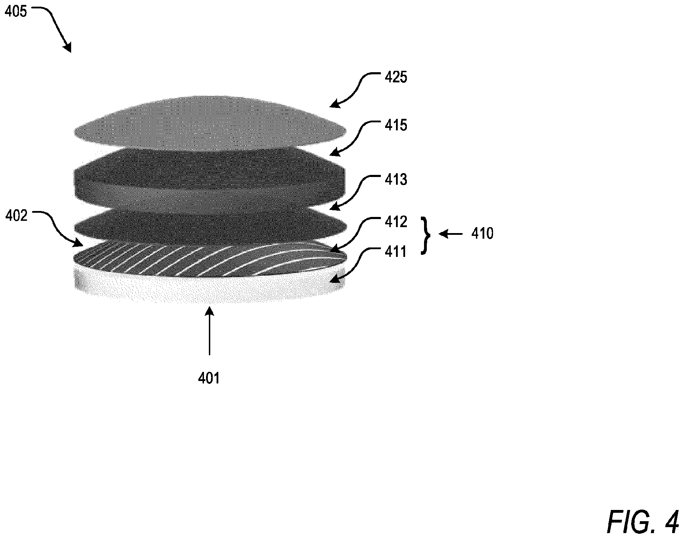

With that, and with reference now to FIG. 4, an illustration of a sun lens 405 is provided according to an embodiment of the present disclosure. The sun lens 405 may comprise a lens substrate 410, including a base substrate 411 and a coating 412, a treatment layer 413, an inorganic layer 415, and an anti-fouling coating 425. The inorganic layer 415 may be deposited on a convex surface 402 of the lens substrate 410, opposite a concave surface 401 of the lens substrate 410 which is nearest an eye of a sun lens wearer, the convex surface 402 of the lens substrate 410 being at least partially treated by the treatment layer 413. Though illustrated as a physical layer in FIG. 4, it can be appreciated that the treatment layer 413 merely reflects a surface treatment method and does not necessarily constitute a physical layer within the sun lens 405.

In an embodiment, the base substrate 411 of the lens substrate 410 may be made of mineral glass or organic glass. For instance, the base substrate 411 of the lens substrate 410 may be organic glass (e.g., polymer substrate). The organic glass can be of any material applicable to organic ophthalmic lenses, such as thermoplastic materials including polycarbonates and thermoplastic polyurethanes or thermosetting materials (e.g. cross-linked materials) including those obtained by polymerization of allyl derivatives such as the allyl carbonates of linear or branched aliphatic or aromatic polyols. This may further include diethylene glycol bis(allyl carbonate), isopropylene bis phenol-A bis(allyl carbonate), poly(meth)acrylates and copolymers based substrates, polythio(meth)acrylates, thermosetting polyurethanes, polythiourethanes, polyepoxides, polyepisulfides, as well as copolymers thereof and blends thereof. In an exemplary embodiment, the base substrate 411 of the lens substrate 410 may be one obtained by (co)polymerizing bis allyl carbonate of diethylene glycol, marketed by PPG Industries as CR-39^{®}. The base substrate 411 may have a refractive index of about 1.5.

In an embodiment, the coating 412 may be a hard coating that provides certain abrasion-resistant and/or anti-scratch properties to the base substrate 411. The coating may be a Mithril hard coat (Essilor) and, in particular, based on a hydrolysate of γ-glycidoxypropyltrimethoxysilane (GLYMO) and dimethyldiethoxysilane (DIVIDES), with colloidal silica and aluminum acetyl acetonate. The Mithril hard coat may have a refractive index of around 1.5. In an example, the Mithril hard coat has a refractive index of 1.6. The Mithril hard coat may have a thickness of between 3 µm and 6 µm, in an example, and may be applied to the base substrate 411 by dip coating and the like. Preferably, the coating 412 may be a Mithril hard coat and may be 3.5 µm.

In an embodiment, the treatment layer 413 may be a treatment applied to the convex surface 402 of the lens substrate 410 in order to prepare the convex surface 402 of the lens substrate 410 to receive and adhere to the deposited inorganic layer 415. The applied treatment may be a physical or chemical pre-treatment step and may include a high-frequency discharge plasma treatment, a glow discharge plasma treatment, a corona treatment, an electron beam treatment, an ion beam treatment (i.e., ion beam pre-cleaning), a solvent treatment, or an acid-base treatment such as NaOH. As in the exemplary embodiment described herein, where the base substrate 411 of the lens substrate 410 is CR-39®, the treatment layer 413 may be particularly advantageous in improving adhesion between the lens substrate 410 and the inorganic layer 415. Such approach may be similarly advantageous for other polycarbonates, including others fabricated from bisphenol-A polycarbonate, sold for example under the trade names LEXAN® by General Electric or MAKROLON® by Bayer AG.

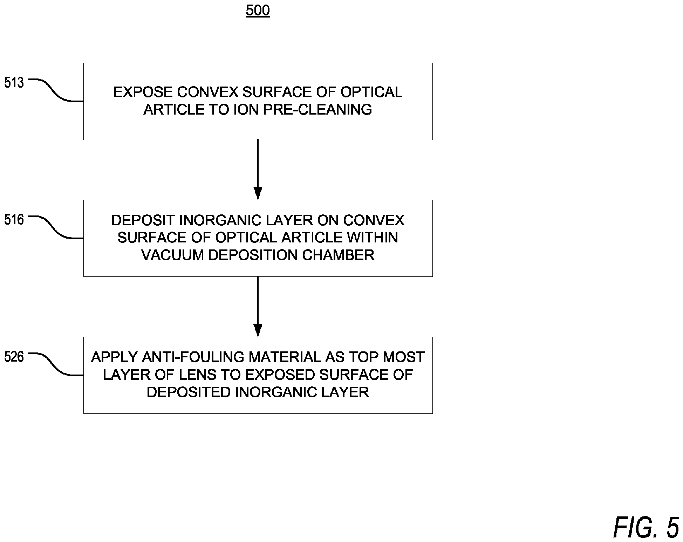

In an embodiment, the applied treatment may be an ion beam pre-cleaning (IBPC). The IBPC may be conducted under a vacuum within a vacuum deposition chamber and may include bombardment of the convex surface 402 of the lens substrate 410 with energetic species. Further description of IBPC will be described with reference to FIG. 5, but a result thereof includes the convex surface 402 of the lens substrate 410 being debrided and prepared to receive deposition of the inorganic layer 415.

In an embodiment, the inorganic layer 415 may be a layer containing less than 5% by weight of carbon and, in an example, less than 1% by weight of carbon. The inorganic layer 415 may be, for instance, a silica layer deposited onto the convex surface 402 of the lens substrate 410 following treatment of the coating 412 of the lens substrate 410. The silica layer may be at least 80% by weight of SiO₂, preferably at least 90% by weight of SiO₂, more preferably at least 95% by weight of SiO₂ and most preferably 100% by weight of SiO₂. The silica layer may have a refractive index of about 1.5. The silica layer may have a predetermined thickness of between 80 nm and 300 nm, preferably between 175 nm and 250 nm, and more preferably about 215 nm. The predetermined thickness of the silica layer may be based on the refractive index of the base substrate 411 and the coating 412 of the lens substrate 410. As introduced above, the silica layer may provide anti-abrasion properties to the sun lens 405. Of course, it can be appreciated that the inorganic layer 415 may be any oxide or other material having similar material properties and functional properties. For instance, any material that has a low refractive index and low absorption may be considered. Consideration may also be given to dielectric layers in view of intended visual outcomes.

In an embodiment, the anti-fouling coating 425 may be applied following deposition of the inorganic layer 415 to the convex surface 402 of the lens substrate 410. The anti-fouling coating 425 may be a top coat of the sun lens 405 and may form the exterior barrier of the sun lens 405. In this way, an anti-reflective coating or AR stack is not implemented on, at least, a front side of the sun lens 405. The anti-fouling coating 425 may be hydrophobic and, thereby, allow an exterior surface of the sun lens 405 to be readily cleaned. In an embodiment, the anti-fouling coating 425 may be an organic material. The organic material may be comprised of at least 40% by weight of organic matter, and preferably at least 50% by weight of organic matter, relative to a total weight of the anti-fouling coating 425. The anti-fouling coating 425 may be a liquid coating material including at least one fluorinated compound. This is important in view of a desired hydrophobicity of the anti-fouling coating 425. Hydrophobic surface coatings most often comprise silane-based compounds bearing fluorinated groups and, in particular, perfluorocarbon or perfluoropolyether group(s). By way of example, silazane, polysilazane or silicone compounds are to be mentioned, comprising one or more fluorinecontaining groups such as those mentioned here above.

A classical method to form the anti-fouling coating 425 includes depositing compounds bearing fluorinated groups and Si-R groups, where R represents an -OH group or a precursor thereof, such as -Cl, -NH₂, -NH- or -O-alkyl, and preferably an alkoxy group. Such methodology has been described above with reference to FIG. 2 and FIG. 3 and, therefore, will be omitted here for brevity.

Commercial compositions for making the anti-fouling coating 425 include the compositions KY130 and KP 801 M commercialized by Shin-Etsu Chemical and the composition OPTOOL DSX (a fluorinebased resin comprising perfluoropropylene moieties) commercialized by Daikin Industries, which may be referred to herein as DSX.

The liquid coating material for forming the anti-fouling coating 425 of the disclosure may comprise one or more of the above cited compounds. Preferably, such compounds or mixtures of compounds are liquid or can be rendered liquid by heating, thus being in a suitable state for deposition.

Referring now the flow diagram of FIG. 5, a method of generating a sun lens having improved abrasion resistance, as shown in FIG. 4, will now be described.

At step 513 of method 500, a convex surface of a lens substrate may be exposed to IBPC under vacuum within a vacuum deposition chamber. The lens substrate may include a base substrate and a coating, or hard coating, wherein the base substrate of the lens substrate may be made of mineral glass or organic glass and may be, in an example, a substrate obtained by (co)polymerizing bis allyl carbonate of diethylene glycol, marketed by PPG Industries as CR-39®. The coating may be a hard coating that provides certain abrasion-resistant and/or anti-scratch properties to the base substrate. The coating may be a Mithril hard coat (Essilor) and, in particular, based on a hydrolysate of γ-glycidoxypropyltrimethoxysilane (GLYMO) and dimethyldiethoxysilane (DIVIDES), with colloidal silica and aluminum acetyl acetonate. The Mithril hard coat may have a thickness of between 1 µm and 10 µm, preferably between 2 µm and 6 µm, and more preferably between 3 µm and 5 µm, in an example. Preferably, the coating may be a Mithril hard coat and may have a thickness of 3.5 µm. In an embodiment, the coating may be deposited onto at least a part of a convex surface of the base substrate, preferably onto the entirety of the convex surface of the base substrate, by any one of a variety of methods used in coating technology. Such methods include, for instance, spray coating, spin coating, flow coating, brush coating, dip coating, and roll-coating. The composition can also be applied by a series of successive layers or thin coats onto the base substrate to achieve the desired thickness. Subsequently, the coating may be cured by conventional techniques (e.g., thermal or UV).

Prior to IBPC treatment at step 513 of method 500, the lens substrate may be positioned within the vacuum deposition chamber and the vacuum may first be applied to the vacuum deposition chamber. The vacuum pressure within the vacuum deposition chamber may be selected in accordance with the particular materials and machines involved. For instance, the vacuum may be applied to a pressure of between 2e-3 Pa and 4e-3 Pa, and preferably about 3.5e-3 Pa. Under vacuum, the IBPC treatment may be applied to the convex surface of the lens substrate for a predetermined time. The predetermined time of the IBPC treatment may be between 30 seconds and 150 seconds, preferably between 60 seconds and 130 seconds, and more preferably about 120 seconds. It can be appreciated, however, that the predetermined time of the IBPC treatment may be dependent upon the exact materials that comprise the lens substrate and the inorganic layer, as well as machine constraints of specific vacuum deposition chambers. Moreover, IBPC treatment may be one of a variety of methods for bombardment of the convex surface of the lens substrate with an energetic species. Alternatively, a corona discharge treatment, an ion spallation treatment, or a plasma treatment under vacuum treatment may be applied to the convex surface of the lens substrate. In an exemplary embodiment, the IBPC treatment applies argon, oxygen, or mixtures thereof as an ionized gas under an acceleration voltage of between 50V and 200V and an intensity of between 1A and 4A. As used herein, the "energetic species" are species defined as having an energy of between 1eV and 150eV, preferably between 10eV and 150eV, and more preferably between 40eV and 150eV. The energetic species may be chemical species such as ions, radicals, or species like electrons. As used herein, an "ion bombardment" is defined as a bombardment with ions having an energy higher than or equal to 30eV and preferably higher than or equal to 40eV.

Following application of the treatment at step 513 of method 500, an inorganic layer may be deposited onto the treated lens substrate. Accordingly, at step 516 of method 500, the inorganic layer may be deposited on the convex surface of the lens substrate, within the vacuum deposition chamber. The inorganic layer may be deposited by evaporation. In an example, the inorganic layer may be a layer of silica, or SiO₂. The silica layer may be deposited by evaporating SiO₂ and/or SiOₓ, where 1<x<2, under the vacuum within the vacuum deposition chamber. The deposition rate during deposition of the silica layer may range between 0.2 nm/s and 1.5 nm/s, preferably between 0.3 nm/s and 0.7 nm/s, and preferably about 0.5 nm/s. It can be appreciated that the silica layer may comprise at least 80% by weight of SiO₂, preferably at least 90% by weight of SiO₂, more preferably at least 95% by weight of SiO₂, and most preferably 100% by weight of SiO₂. In an embodiment, a thickness of the deposited inorganic layer, or silica layer, in an example, may be between 80 nm and 300 nm, preferably between 175 nm and 250 nm, and more preferably about 215 nm. As introduced above, the silica layer may provide anti-abrasion properties to the sun lens.

During deposition of the silica layer, oxygen gas (O₂) may be introduced inside the vacuum deposition chamber during evaporation of the silicon oxide. The partial pressure of O₂ may be selected in accordance with the particular materials and machines involved. For instance, a minimum partial pressure of O₂ may be required for adhesion of the silica layer to the lens substrate. For instance, the partial pressure of O₂ (pO₂) within the vacuum deposition chamber during deposition of the silica layer may be higher than or equal to 1e-4 Pa, and preferably is between 1.2e-2 Pa and 5e-2 Pa. In an example, the pO₂ is about 2.6e-2 Pa.

At step 526 of method 500, an anti-fouling coating may be applied to an exposed surface of the inorganic layer deposited at step 516 of method 500. The anti-fouling coating may be a hydrophobic coating, as described above. The anti-fouling coating may be applied by liquid phase deposition techniques including dip coating, spin coating (e.g., centrifugation), spray coating, or vapor phase deposition (e.g., vacuum evaporation). In the context of the present disclosure, vacuum evaporation is used in one embodiment. In an example, the anti-fouling coating may be DSX. During vacuum evaporation, the DSX may be positioned in a copper capsule and the capsule positioned in the middle of a tantalum evaporation boat and evaporated by Joule effect within the vacuum deposition chamber. The pressure during evaporation may be between 1e-5 Pa and 2.5e-2 Pa, and preferably about 2.5e-3 Pa. The applied anti-fouling coating may have a thickness lower than 15 nm, more preferably between 1 nm and 10 nm, and more preferably between 1 nm and 5 nm. Control of the deposited thickness can be performed by means of a quartz scale. The anti-fouling coating used herein may be used to improve dirty mark resistance of the finished article, which is particularly useful for optical lens. Reducing surface energy avoids the adhesion of fatty deposits, such as fingerprints, sebum, sweat, and cosmetics, and renders the sun lens easier to clean.

In certain embodiments, step 526 of method 500 may include application of a magnesium sulfide/magnesium oxide layer that assists with edging of the sun lens. The magnesium sulfide/magnesium oxide layer, however, may be removed by wiping, for instance, prior to evaluation and finishing.

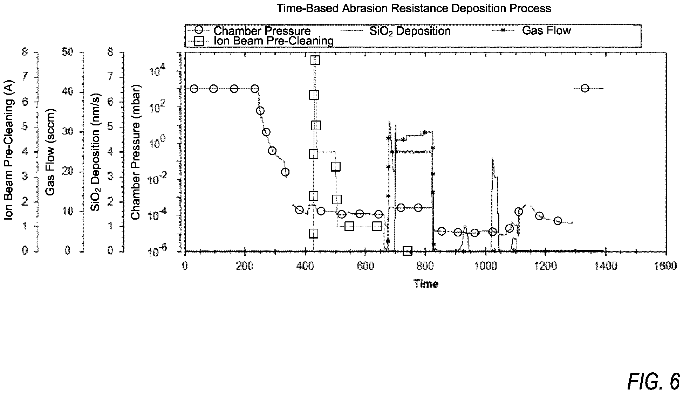

In view of the above description of FIG. 4, the graphical illustration of FIG. 6 illustrates the flow diagram of FIG. 5. The flow diagram of FIG. 5 depicts sequences within a vacuum deposition chamber, according to methods of the present disclosure. With time on the x-axis, it can be appreciated that (1) a vacuum, as indicated by circular indicia, may be initially applied and maintained during (2) ion beam pre-cleaning indicated by square indicia, (3) gas flow indicated by asterisks, and (4) silica deposition indicated by a line having no other indicia. Visually, therefore, it can be appreciated that the ion beam pre-cleaning may be applied under vacuum and the silica layer may be deposited under vacuum and under a partial pressure of a gas (e.g., oxygen).

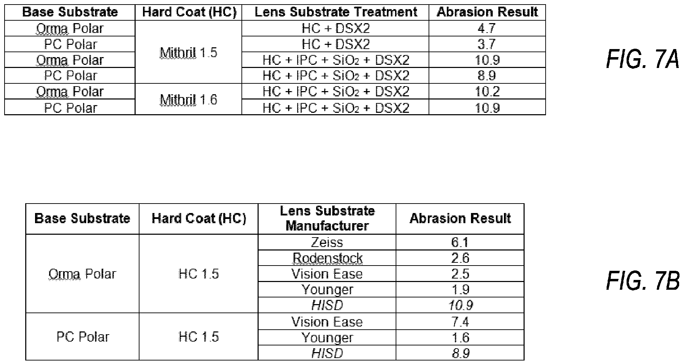

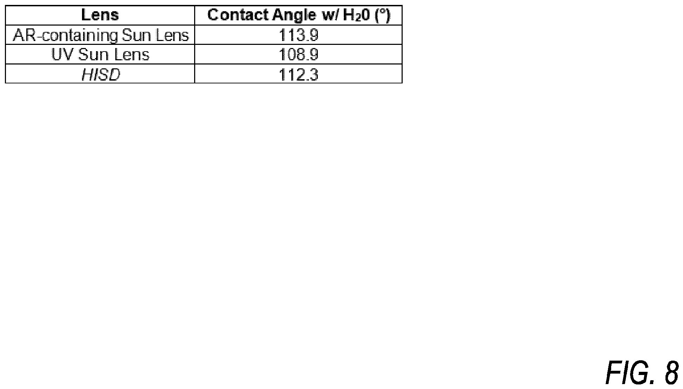

Sun lens fabricated according to the above-described processes will now be described with reference to FIG. 7A, FIG. 7B, and FIG. 8, where exemplary sun lenses are evaluated by standard techniques and compared with commercially available products.

### Examples

FIG. 7A and FIG. 7B are directed to evaluation of abrasion resistance of the sun lens, which has been a focus of the present disclosure.

FIG. 7A, for instance, demonstrates abrasion resistant properties of combinations of lens substrates and lens substrate treatments thereto that may include an inorganic layer and an anti-fouling coating. To evaluate abrasion resistance, a Bayer Test may be performed in accordance with ASTM Standard F 735.81, wherein a higher value of the Bayer Test result indicates a stronger resistance to abrasion. The test comprises simultaneously stirring a test sample and a control specimen with an alternating movement in a tank comprising an abrasive medium. The abrasive medium may be an abrasive powder (e.g. sand) having a defined particle size. The alternating movement may be a reciprocating back-and-forth motion a distance of 4 inches at 150 cycles per minute for 4 minutes. In an example, the reciprocating motion may be at a frequency of 100 cycles per minute and for a period of 2 minutes. A haze gain measurement acquired before and after each of the test sample and the control specimen are abraded may be compared. As a control, the control specimen may be an ISO Reference Lens, or an uncoated ORMA® substrate for which the Bayer Test value may be fixed to 1. The Bayer Test value, therefore, indicates an abrasion resistance of the test sample relative to an uncoated ORMA® substrate.

As in the tabular illustration of FIG. 7A, test samples included combinations of lens substrates and lens substrate treatments that may include inorganic layers and anti-fouling coatings. Base substrates of the lens substrates were Orma^{®} polar substrates and polycarbonate substrates. Coatings of the base substrates were Mithril hard coatings with a refractive index of either 1.5 or 1.6. The lens substrate treatments included either only the anti-fouling coating or the anti-fouling coating provided after IBPC and deposition of the inorganic layer. For evaluation, the anti-fouling coating was a DSX2 coating and the inorganic layer was a silica layer. The lens substrate treatments were applied as described above with reference to the flow diagrams. As evidence by the rightmost column of the tabular illustration of FIG. 7A, sun lenses featuring a silica layer performed 2-fold better than similar treatments lacking the silica layer.

Similar results may be appreciated with respect to FIG. 7B, wherein lens substrate treatments of commercial manufacturers and the lens substrate treatments of the present disclosure are compared under the same testing conditions as the Bayer Test described with reference to FIG. 7A. The test samples included combinations of lens substrates and lens substrate treatments that may include inorganic layers and anti-fouling coatings. Base substrates of the lens substrates were Orma® polar substrates and polycarbonate substrates. Coatings of the base substrates were Mithril hard coatings with a refractive index of 1.5. The lens substrate treatments included, as in the present disclosure, the anti-fouling coating provided after IBPC and deposition of the inorganic layer (Mithril hard coating + IBPC + silica layer + DSX2) (*HISD*), as well as other commercially available lens substrate treatments. As above, the anti-fouling coating was a DSX2 coating and the inorganic layer was a silica layer. The lens substrate treatment was applied as describe above with reference to the flow diagrams. As evidence by the rightmost column of the tabular illustration of FIG. 7B, sun lenses featuring *HISD* as the lens substrate treatment, which implements the methods of the present disclosure, performs evidently better than lenses of commercial manufacturers.

Moreover, and with reference now to the tabular illustration of FIG. 8, a sun lens according to the methods of the present disclosure exhibits competitive hydrophobicity when compared with similar sun lenses, as determined by a standard contact angle test using water wherein a higher contact angle indicates improved hydrophobicity. For instance, a sun lens fabricated via *HISD* exhibits a contact angle comparable to that of an AR stack-containing sun lens. This is in further comparison with a standard ultraviolet sun lens exhibiting a decreased contact angle relative thereto. Accordingly, it can be appreciated that a sun lens including *HISD* treatment may be one having a contact angle of between 100° and 120°, and preferably between 110° and 115°. Such an enhancement in hydrophobicity and, therefore, anti-smudge performance, is made possible by the implementation of the methods of the present disclosure.

Obviously, numerous modifications and variations are possible in light of the above teachings. It is therefore to be understood that within the scope of the appended claims, the invention may be practiced otherwise than as specifically described herein.

Embodiments of the present disclosure may also be as set forth in the following parentheticals.
(1) A method of improving abrasion resistance of a lens, comprising depositing an inorganic layer of a predetermined thickness on a convex surface of a lens substrate within a vacuum deposition chamber, and applying an anti-fouling coating as a top most layer of the lens to an exposed surface of the deposited inorganic layer, wherein the lens substrate includes a hard coating on a convex surface of a base substrate.
(2) The method according to (1), further comprising exposing the convex surface of the lens substrate to ion beam pre-cleaning for a predetermined time period.
(3) The method according to either (1) or (2), wherein the predetermined time period that the convex surface of the lens substrate is exposed to the ion beam pre-cleaning is between 90 seconds and 150 seconds.
(4) The method according to any one of (1) to (3), wherein the deposited inorganic layer is a silicon dioxide layer.
(5) The method according to any one of (1) to (4), wherein the predetermined thickness of the silicon dioxide layer is based on a refractive index of the silicon dioxide layer and a refractive index of the hard coating on the convex surface of the base substrate.
(6) The method according to any one of (1) to (5), wherein the predetermined thickness of the silicon dioxide layer is greater than 100 nm.
(7) The method according to any one of (1) to (6), wherein the depositing includes applying an oxygen partial pressure within the vacuum deposition chamber.
(8) The method according to any one of (1) to (7), wherein the depositing includes depositing an inorganic material on the convex surface of the lens substrate at a rate of between 0.2 nm/s and 1.5 nm/s.
(9) The method according to any one of (1) to (8), wherein the applied anti-fouling coating is a fluorinated material.
(10) A lens having abrasion resistance, comprising a lens substrate including a hard coating on a convex surface of a base substrate, an inorganic layer that is deposited, within a vacuum deposition chamber, on the hard coating of the lens substrate, the inorganic layer having a predetermined thickness, and an anti-fouling coating that is applied, within the vacuum deposition chamber, as a top most layer of the lens, to an exposed surface of the inorganic layer, a surface of the anti-fouling coating being exposed to atmosphere following retrieval of the lens from the vacuum deposition chamber.
(11) The lens according to (10), wherein the base substrate is polycarbonate and the lens substrate is an ion beam pre-cleaned lens substrate.
(12) The lens according to either (10) or (11), wherein the inorganic layer is a silicon dioxide layer.
(13) The lens according to any one of (10) to (12), wherein the predetermined thickness of the silicon dioxide layer is based on a refractive index of the silicon dioxide layer and a refractive index of the hard coating on the convex surface of the base substrate.
(14) The lens according to any one of (10) to (13), wherein the predetermined thickness of the silicon dioxide layer is greater than 100 nm.
(15) The lens according to any one of (10) to (14), wherein a contact angle of the exposed surface of the anti-fouling coating is between 110° and 115°.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of improving abrasion resistance of a lens, comprising:
depositing an inorganic layer of a predetermined thickness on a convex surface of a lens substrate within a vacuum deposition chamber; and
applying an anti-fouling coating as a top most layer of the lens to an exposed surface of the deposited inorganic layer, wherein
the lens substrate includes a hard coating on a convex surface of a base substrate.

2. The method according to claim 1, further comprising:
exposing the convex surface of the lens substrate to ion beam pre-cleaning for a predetermined time period.

3. The method according to claim 2, wherein the predetermined time period that the convex surface of the lens substrate is exposed to the ion beam pre-cleaning is between 90 seconds and 150 seconds.

4. The method according to claim 1, wherein the deposited inorganic layer is a silicon dioxide layer.

5. The method according to claim 4, wherein the predetermined thickness of the silicon dioxide layer is based on a refractive index of the silicon dioxide layer and a refractive index of the hard coating on the convex surface of the base substrate.

6. The method according to claim 4, wherein the predetermined thickness of the silicon dioxide layer is greater than 100 nm.

7. The method according to claim 1, wherein the depositing includes applying an oxygen partial pressure within the vacuum deposition chamber.

8. The method according to claim 1, wherein the depositing includes depositing an inorganic material on the convex surface of the lens substrate at a rate of between 0.2 nm/s and 1.5 nm/s.

9. The method according to claim 1, wherein the applied anti-fouling coating is a fluorinated material.

10. A lens having abrasion resistance, comprising:
a lens substrate including a hard coating on a convex surface of a base substrate;
an inorganic layer that is deposited, within a vacuum deposition chamber, on the hard coating of the lens substrate, the inorganic layer having a predetermined thickness; and
an anti-fouling coating that is applied, within the vacuum deposition chamber, as a top most layer of the lens, to an exposed surface of the inorganic layer, a surface of the anti-fouling coating being exposed to atmosphere following retrieval of the lens from the vacuum deposition chamber.

11. The lens according to claim 10, wherein the base substrate is polycarbonate and the lens substrate is an ion beam pre-cleaned lens substrate.

12. The lens according to claim 10, wherein the inorganic layer is a silicon dioxide layer.

13. The lens according to claim 12, wherein the predetermined thickness of the silicon dioxide layer is based on a refractive index of the silicon dioxide layer and a refractive index of the hard coating on the convex surface of the base substrate.

14. The lens according to claim 12, wherein the predetermined thickness of the silicon dioxide layer is greater than 100 nm.

15. The lens according to claim 10, wherein a contact angle of the exposed surface of the anti-fouling coating is between 110° and 115°.
